# EUROPEAN PATENT APPLICATION

(11) **EP 3 817 490 A1**
(43) Date of publication of application: **05.05.2021**
(21) Application number: 18923871.0
(22) Date of filing: 29.06.2018
(51) Int. Cl.: H04W 72/12, H04W 72/04

(54) **USER TERMINAL**

(71) Applicant: NTT DOCOMO, INC., Tokyo 100-6150 (JP)
(72) Inventor: TAKEDA, Kazuki, Tokyo 100-6150 (JP); YOSHIOKA, Shohei, Tokyo 100-6150 (JP); NAGATA, Satoshi, Tokyo 100-6150 (JP); WANG, Lihui, Beijing 100190 (CN); GUO, Shaozhen, Beijing 100190 (CN); HOU, Xiaolin, Beijing 100190 (CN)
(74) Representative: Hoffmann Eitle
(86) International application number: PCT/JP2018/024913
(87) International publication number: WO 2020/003523

(57) **Abstract**

User terminal according to an aspect of the present disclosure includes: a receiving section that receives a downlink shared channel scheduled by downlink control information (DCI) for each repetition; and a control section that controls a soft combining of data transmitted by the downlink shared channel based on the DCI. According to the user terminal, gain may be obtained sufficiently through the repetition of the downlink shared channel.

## Description

### Technical Field

The present disclosure relates to user terminal in a next-generation mobile communication system.

### Background Art

In the Universal Mobile Telecommunications System (UMTS) network, the specifications of long-term evolution (LTE) have been drafted for the purpose of further increasing high speed data rates, providing lower delays, and so on (see Non Patent Literature 1). In addition, the specifications of LTE-A (LTE Advanced, LTE Rel. 10, 11, 12, 13) have been drafted for the purpose of further increasing the capacity and sophistication of LTE (LTE Rel. 8, 9).

Successor systems of LTE are also under study (also referred to as, for example, "Future Radio Access (FRA)", "5th generation mobile communication system (5G)", "5G+ (plus)", "New Radio (NR)", "New radio access (NX)", "Future generation radio access (FX)", "LTE Rel. 14" or "LTE Rel. 15 or later versions", and so on).

The conventional LTE system (such as LTE Rel. 8-14) is such that user terminal (user equipment (UE)) controls reception of a downlink shared channel (such as PDSCH: Physical Downlink Shared Channel) on the basis of downlink control information (DCI, which may be referred to as DL assignment or the like) transmitted via a downlink control channel (such as PDCCH: Physical Downlink Control Channel). Also, the user terminal controls transmission of the uplink shared channel (for example, physical uplink shared channel (PUSCH)) based on the DCI (also referred to as UL grant).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In future radio communication systems (for example, NR, 5G, 5G+, or Rel. 15 and thereafter), transmitting a repetition of a given channel (such as the PDSCH or the PUSCH, for example) and at least one signal (channel/signal) is under review. Repetition is considered to be useful in services such as Ultra Reliable and Low Latency Communications (URLLC), for example.

For example, in Rel. 15 NR, the repetition of a channel/signal using at least one resource such as a time-domain resource, a frequency-domain resource, a Modulation and Coding Scheme (MCS) index, and a DMRS configuration allocated in the same way to a given number of consecutive slots is under review.

However, as reviewed in Rel. 15 NR, even if inflexible repetition is performed, there are concerns about being unable to obtain gain sufficiently through the repetition of a channel/signal (for example, the PDSCH).

Accordingly, one object of the present disclosure is to provide user terminal capable of obtaining gain sufficiently through the repetition of a channel/signal (for example, the PDSCH).

### Solution to Problem

User terminal according to an aspect of the present disclosure includes: a receiving section that receives a downlink shared channel scheduled by downlink control information (DCI) for each repetition; and a control section that controls a soft combining of data transmitted by the downlink shared channel on the basis of the DCI.

### Advantageous Effects of Invention

According to an aspect of the present disclosure, gain may be obtained sufficiently through the repetition of a channel/signal (for example, the PDSCH).

### Brief Description of Drawings

Fig. 1 is a diagram illustrating an example of the repetition of the PDSCH.
Figs. 2A and 2B are diagrams illustrating illustrative examples of repeated transmission of channel/signal by using a plurality of TRPs.
Fig. 3 is a diagram illustrating an example of the repetition of the PDSCH according to a first aspect.
Fig. 4 is a diagram illustrating another example of the repetition of the PDSCH according to the first aspect.
Figs. 5A and 5B are diagrams illustrating an example of setting the frequency band for the repetition of the PDSCH according to the first aspect.
Figs. 6A and 6B are diagrams illustrating an example of setting the period for the repetition of the PDSCH according to the first aspect.
Figs. 7A and 7B are diagrams illustrating an example of soft combining based on the HPN according to a second aspect.
Figs. 8A and 8B are diagrams illustrating an example of soft combining based on the counter DAI according to a second aspect.
Figs. 9A and 9B are diagrams illustrating an example of cross-CC/BWP scheduling according to another aspect.
Fig. 10 is a diagram to illustrate an example of a schematic configuration of a radio communication system according to the present embodiment.
Fig. 11 is a diagram to illustrate an example of an overall configuration of a radio base station according to the present embodiment.
Fig. 12 is a diagram to illustrate an example of a functional configuration of the radio base station according to the present embodiment.
Fig. 13 is a diagram to illustrate an example of an overall configuration of user terminal according to the present embodiment.
Fig. 14 is a diagram to illustrate an example of a functional configuration of the user terminal according to the present embodiment.
Fig. 15 is a diagram to illustrate an example of a hardware configuration of the radio base station and the user terminal according to the present embodiment.

### Description of Embodiments

It has been discussed to configure future radio communication systems (such as NR, 5G, 5G+, or Rel. 15 or later) such that at least either a channel or a signal (channel/signal) will be transmitted by repeated transmission. Examples of the channel/signal include PDSCH, PDCCH, PUSCH, PUCCH, DL-RS, uplink reference signal (UL-RS), and the like, but the channel/signal is not limited to these.

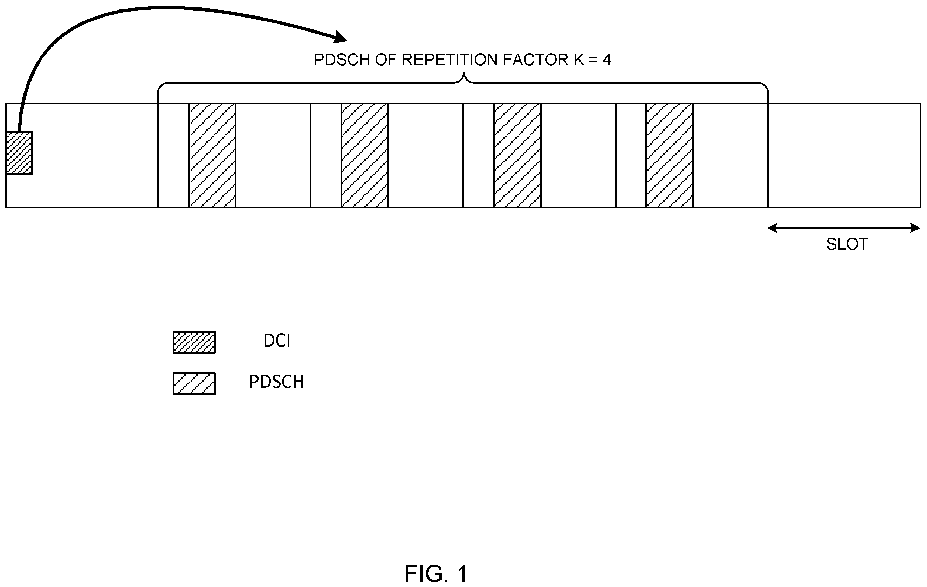

Fig. 1 is a diagram illustrating an example of the repetition of the PDSCH. Fig. 1 illustrates an example in which a given number of repetitions of the PDSCH is scheduled with a single DCI. The number of repetitions is also referred to as the repetition factor K or the aggregation factor K. For example, in Fig. 1, the repetition factor K = 4, but the value of K is not limited to this. Additionally, the nth repetition is also referred to by names such as the nth transmission occasion or the like, and may also be identified by a repetition index k (where 0 ≤ k ≤ K - 1).

For example, in Fig. 1, the user terminal receives information indicating the repetition factor K through higher-layer signaling. Here, the higher layer signaling may be, for example, any of Radio Resource Control (RRC) signaling, Medium Access Control (MAC) signaling, broadcast information, and so on, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), or the like.

As illustrated in Fig. 1, the user terminal detects the DCI scheduling the PDSCH to be repeated in a certain serving cell or in a partial band (bandwidth part (BWP)) inside the serving cell. The BWP may have an uplink (UL) BWP (UL BWP, uplink BWP) and a downlink (DL) BWP (DL BWP, downlink BWP). In other words, the user terminal communicates by using a certain serving cell or the uplink (UL) BWP (UL BWP, uplink BWP) and the downlink (DL) BWP (DL BWP, downlink BWP) inside the serving cell.

The user terminal may also monitor a CORESET configured in the DL BWP (one or more search space sets (SS sets) or PDCCH candidates forming the SS set(s) associated with the CORESET), and detect the DCI. The user terminal receives the PDSCH in K consecutive slots after a given period from the slot in which the DCI is detected. Note that the serving cell is also referred to by names such as carrier, component carrier (CC), or cell.

Specifically, the user terminal controls the PDSCH receiving process (for example, at least one of receiving, demapping, demodulation, and decoding) in the K consecutive slots on the basis of at least one of the following field values (or information indicating the field value) in the above DCI:
- the allocation of time-domain resources (such as the start symbol and the number of symbols in each slot, for example),
- the allocation of frequency-domain resource (for example, a given number of resource blocks (RBs) or a given number of resource block groups (RBGs)),
- the Modulation and Coding Scheme (MCS) index,
- the configuration of the demodulation reference signal (DMRS) of the PDSCH, and
- the state (TCI-state) of the transmission configuration indication or transmission configuration indicator (TCI).

The user terminal controls the receiving of the PDSCH in each slot by assuming the same time-domain resource, the same frequency-domain resource, the same MCS index, and the same DMRS configuration allocated to the PDSCH in the K (in Fig. 1, K = 4) consecutive slots configured semi-statically by higher layer signaling. In other words, the user terminal assumes that the above field values in the single DCI will be applied to all of the K consecutive slots.

On the other hand, the user terminal controls the receiving of the PDSCH in each slot by assuming that a redundancy version (RV) applied to the PDSCH will change in a given order (for example, 0→2→3→1) in the K consecutive slots.

Additionally, to improve robustness in the future radio communication systems described above, the repetition of a channel/signal by using a plurality of transmission and reception points (TRPs) is also under review.

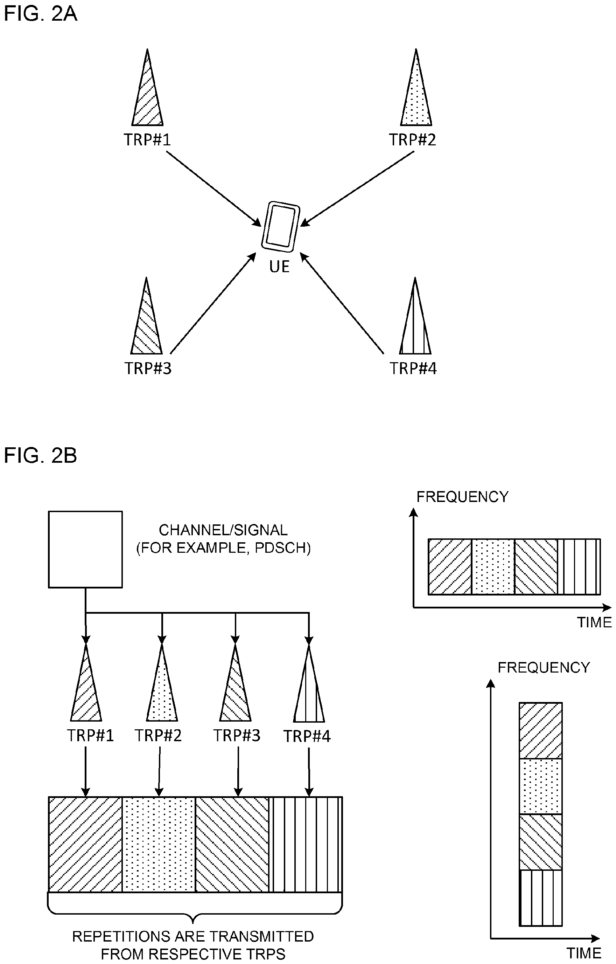

Figs. 2A and 2B are diagrams illustrating illustrative examples of repeated transmission of channel/signal by using a plurality of TRPs. For the illustrative purposes, Figs. 2A and 2B illustrate example of repeated transmission of PDSCH by using TRP#1 to TRP#4. It should be noted that the present invention is not limited to the example illustrated in Fig. 2A where the TRP#1 to TRP#4 have different geographic locations (TCI states). The TRP#1 to TRP#4 may be different antenna panels provided at the same transmission site. Moreover, the number of TRPs used for the repeated transmission is not limited to the number as illustrated in the drawings.

As illustrated in Fig. 2B, the repeated transmission may be such that the same PDSCH (or downlink data) is copied by a plurality of TRPs and is transmitted from the plurality of TRPs as repetitions. Here, what is meant by "copying the downlink data" may be copying at least one of an information bit sequence, a code block (CB), a code block group including one or more code block (CBG), a transport block (TB), or a post-coding code word sequence, which constitutes the downlink data.

As an alternative, what is meant by "copying the downlink data" may not be copying a bit sequence as a whole, but may be at least part of code words generated from an information bit sequence or copying at least part of a demodulated symbol sequence. For example, a plurality of pieces of downlink data copied may be such that RVs of the code words thus obtained by coding a certain information bit sequence may be identical with each other or different from each other among the plurality of pieces of DL data copied. As an alternative, a plurality of pieces of downlink data may be demodulated symbol sequences obtained by demodulating such different or identical RVs. Each of the plurality of pieces of downlink data is transmitted as PDSCH. The PDSCH may be such that at least either a time domain or a frequency domain is repeated in different resources.

For example, as illustrated in Fig. 2B, the PDSCH may be repeated in resources identical in frequency domain but sequential in time domain (for example, one or more slots). As an alternative, the PDSCH may be repeated in resources identical in time domain but sequential in frequency domain (for example, one or more RBs or one or more RBGs). The repetitions may be transmitted to different TRPs.

Moreover, even though Fig. 2B illustrates such a case where PDSCH is transmitted to different TRPs every repetition, but the present invention is not limited to this, and PDSCH may be transmitted to different TRPs every a given number of repetitions (one or more repetitions).

It should be noted that the "TRP" may be replaced to read as different terms such as a network, a radio base station, an antenna device, an antenna panel, a serving cell, a cell, a component carrier (CC), a carrier, or the like. Moreover, a phase "TRPs are identical" for different transmission/reception signals or channels may be replaced to read as such a phase that TCI states, QCLs, or QCL relationships are identical between the different transmission/reception signals or channels or between reference signals of the different transmission/reception signals or channels. Moreover, a phase "TRPs are different" for different transmission/reception signals or channels may be replaced to read as such a phase that TCI states, QCLs, or QCL relationships are different between the different transmission/reception signals or channels or between reference signals of the different transmission/reception signals or channels.

In Figs. 2A and 2B, in the following, what is meant by "transmitting a plurality of channels/signals from different TRPs" is identical with what is meant by the plurality of channels/signals having different TCI states of transmission configuration indication or transmission configuration indicator (TCI). The user terminal may be so configured that, if the user terminal receives a plurality of channels/signals having different TCI states, the user terminal assumes that the plurality of channels/signals will be transmitted from different TRPs. Therefore, what is meant by "receiving channels/signals transmitted from different transmission/reception points every a given number of repetitions" is identical with what is meant by receiving channels/signals having different TCI states every a given number of repetitions.

The TCI-state may also indicate (include) information related to quasi-co-location (QCL) of a given channel/signal (QCL information). The QCL is an index showing the statistical properties of the channel/signal. For example, in the case where a signal and another signal have QCL relationship, which means that at least one of Doppler shift, Doppler spread, average delay, delay spread, and spatial parameter (e.g., spatial reception parameter or spatial Rx parameter) is assumable to be the same between these different signals (QCL for at least one of these) of them.

The TCI-state is identified by a given identifier (TCI-StateId). Each TCI-state may also include at least one of information (such as one or more DL-RS and resources for the DL-RS, for example) related to another downlink reference signal (DL-RS) having a QCL relationship with the target channel/signal (or the DMRS for the channel and the antenna port or the antenna port group of the DMRS) and the QCL, and information related to the type of the QCL, the carrier (cell) where the DL-RS is placed, and the BWP, for example.

For example, DL-RS can be at least one of a synchronaization signal (SS), a physical broadcast channel (PBCH), a synchronization signal block (SSB), a mobility reference signal (MRS), a channel state information reference signal (CSI-RS), a CSI-RS for tracking, a beam-specific signal, or the like. In addition, a DL-RS can be a signal constituted by expanding or changing such signal (e.g., a signal constituted by changing at least one of density and period).

The synchronization signal can be, in one example, at least one of a primary synchronaization signal (PSS) and a secondary synchronaization signal (SSS). The SSB is a signal block including a synchronization signal and a broadcast channel, and can be called an SS/PBCH block or the like.

For example, the TCI-state for the PDCCH may include information such as information related to the DL-RS having a QCL relationship with the DMRS (an antenna port of DMRS (DMRS port) or a group of DMRS ports (DMRS port group)) of the PDCCH.

One or more TCI states may be configured for each control resource set (CORESET) for user terminal. The user terminal may also control the PDCCH receiving process on the basis of a TCI-state associated with the CORESET.

Also, the TCI-state for the PDSCH may include information such as information related to the DL-RS having a QCL relationship with the DMRS (DMRS port or DMRS port group) of the PDSCH.

M (where M ≥ 1) TCI-states for the PDSCH may also be configured in the user terminal, and a single TCI-state may be designated by a given field in the DCI (this field may be referred to by names such as the field for the TCI, the TCI field, or the TCI-state field, for example).

However, as illustrated in Fig. 1, in the case where the repetition of the PDSCH is performed by using resources such as a time-domain resource, a frequency-domain resource, an MCS index, and a DMRS configuration allocated in the same way to K consecutive slots, as illustrated in Figs. 2A and 2B, there are concerns about being unable to obtain gain sufficiently through repetition using a plurality of TCI-states (TRPs). A similar problem may also occur in the case of repetition using the same TCI-state (TRP).

Accordingly, the inventors focused on how gain may be obtained efficiently through repetition using the same or different TCI-states (TRPs) by controlling the repetition of the PDSCH more flexibly, which led to the present invention.

Hereinafter, exemplary embodiments will be described in detail and with reference to the drawings. In the following, the repetition of the PDSCH with a repetition factor K may be performed by using the same TCI-state (TRP) or by using TCI-states (TRPs) that are different at intervals of a given number of repetitions (for example, every repetition).

### (First aspect)

In the first aspect, flexible control of the repetition of the PDSCH will be described.

The PDSCH may also be repeated over at least one of consecutive frequency-domain resources and non-consecutive frequency bands. Here, the frequency bands may be at least one of one or more BWPs and one or more CCs, for example.

In addition, the PDSCH may also be repeated over at least one of consecutive time-domain units and non-consecutive time-domain units. Here, the time-domain units may be one or more slots, for example.

At least one of the following may be maintained in the same way through at least two repetitions of the PDSCH:
- the transport block size (TBS), and
- the HARQ process number (HPN: Hybrid Automatic Repeat reQuest Process Number).

On the other hand, at least one of the following may be different between at least two repetitions of the PDSCH:
- a time-domain resource allocated to the PDSCH (such as the start symbol of the PDSCH in a slot and the number of symbols allocated to the PDSCH in a slot, for example),
- a frequency-domain resource allocated to the PDSCH (such as a given number of RBs or RBGs allocated to the PDSCH, for example),
- the MCS index of the PDSCH,
- the multi-input multi-output (MIMO) configuration (also referred to as the number of transport blocks (TBs), the number of layers, or the like),
- the RV applied to the PDSCH,
- the number of code block groups (CBGs) within 1 TB,
- the PUCCH resources used to transmit delivery confirmation information with respect to the PDSCH (also referred to as the Hybrid Automatic Repeat reQuest-Acknowledge (HARQ-ACK), the ACK or NACK, the A/N, or the like),
- TPC commands for the PUCCH used in the transmission of the HARQ-ACK,
- the feedback timing of the HARQ-ACK,
- the TCI-state, and
- the DMRS sequence of the PDSCH.

At least two repetitions of the PDSCH may also be scheduled by a different DCI. For example, each repetition of the PDSCH with a repetition factor K may be scheduled by different DCI, or some of the repetitions may be scheduled by different DCI. Also, the DCI that schedules one repetition may be singular DCI or plural DCI (for example, two-step DCI).

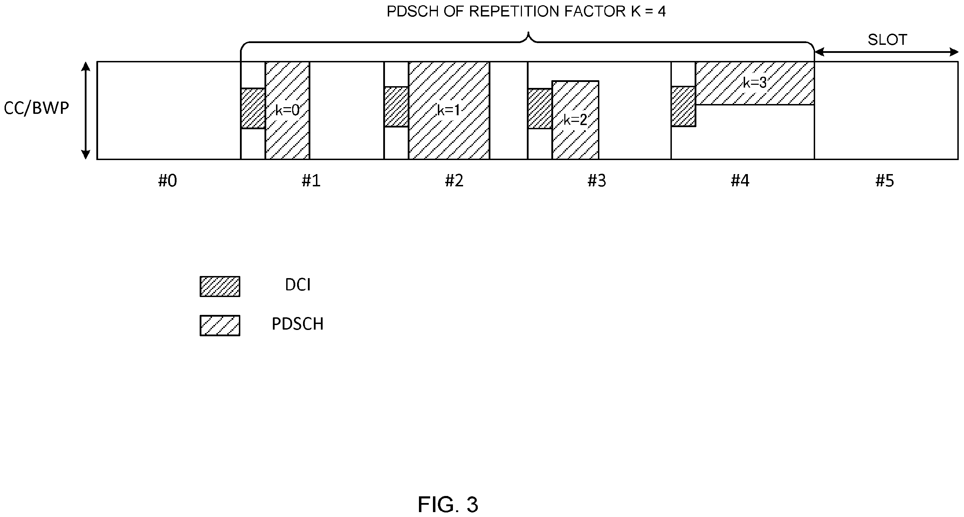

Fig. 3 is a diagram illustrating an example of the repetition of the PDSCH according to the first aspect. Fig. 3 illustrates an example in which K repetitions are respectively scheduled in the time domain of the PDSCH by K DCI. Note that although K = 4 in Fig. 3, the value of K is not limited thereto. Also, the repetition factor K may be configured in the user terminal by higher layer signaling, but does not have to be configured.

Also, in Fig. 3, the repetition of the PDSCH is transmitted in K consecutive slots, but at least one of the K slots does not have to be consecutive. Also, in Fig. 3, the repetition of the PDSCH is transmitted in the same frequency band (CC or BWP, for example), but at least one of the K frequency bands may be different. Furthermore, each repetition may be transmitted from a different TRP (that is, the TCI-state may be different).

In Fig. 3, the user terminal monitors (performs blind decoding of) PDCCH candidates configured in each slot (also referred to by names such as an SS set including one or more search spaces (SS)). For example, in Fig. 3, the user terminal detects K DCI (here, 4 DCI) in K slots (here, #1 to #4), and controls the receiving of the PDSCH with the repetition index k = 0 to K - 1 (here, k = 0 to 3) respectively scheduled by the K DCI.

As illustrated in Fig. 3, a resource such as a frequency-domain resource (for example, the number of RBs) or a time-domain resource (for example, the number of symbols) allocated to the PDSCH may also be different between at least two repetition periods. Note that in Fig. 3, the position of the start symbol of the PDSCH is the same among the repetitions, but properties such as the position of the start symbol may also be different.

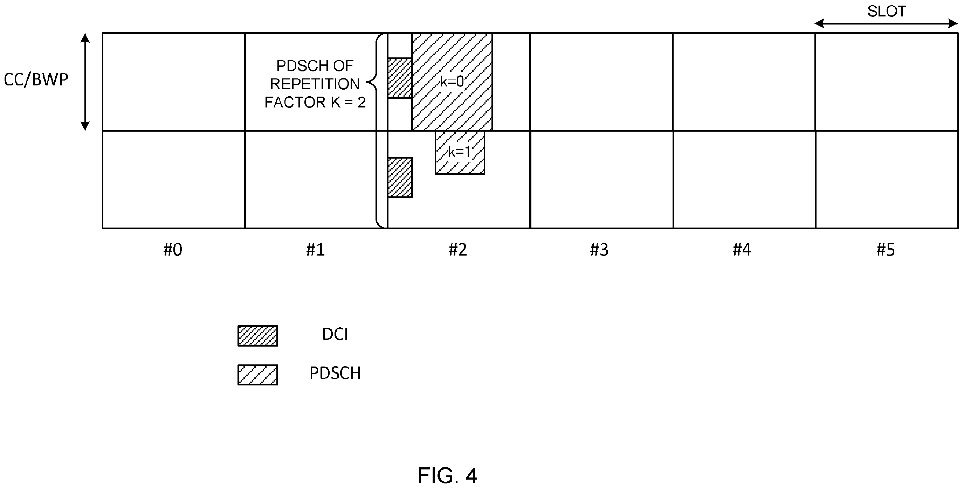

Fig. 4 is a diagram illustrating another example of the repetition of the PDSCH according to the first aspect. Fig. 4 differs from Fig. 3 in that K repetitions are performed in the frequency domain rather than the time domain. Hereinafter, the points that differ from Fig. 3 will be described mainly.

As illustrated in Fig. 4, the repetition of the PDSCH in each of K different frequency bands (for example, CCs or BWPs) may be scheduled by K DCI. For example, in Fig. 4, K = 2, and the PDSCH with the repetition index k = 0, 1 is transmitted in two CCs or two BWPs. Note that each repetition may be transmitted from a different TRP (that is, the TCI-state may be different).

For example, in Fig. 4, the user terminal detects K DCI (here, 2 DCI) in a certain slot (here, slot #2), and controls the receiving of the PDSCH with the repetition index k = 0 to K - 1 (here, k = 0 to 1) respectively scheduled by the K DCI.

### <Frequency bands configured for transmission of repetition>

In the first aspect, one or more frequency bands (for example, a set (CC/BWP set) of one or more CCs or BWPs (CC/BWP)) may be configured for transmitting the repetition of the PDSCH (TB) in the user terminal by higher layer signaling. The one or more frequency bands in which the PDSCH (TB) is actually repeated may be at least a portion (a subset) of the frequency band(s) configured for the user terminal.

The user terminal does not have to expect to receive a repetition outside the configured frequency bands (for example, outside the CC/BWP set). In the case of transmitting a repetition of the PDSCH to specific user terminal, the radio base station controls the repetition such that the PDSCH is transmitted inside the frequency bands (for example, the CC/BWP set) prescribed in advance or configured by higher layer signaling.

The user terminal may also assume that the one or more frequency bands configured for transmitting the repetition of the PDSCH do not lie across a cell group or a PUCCH group. In this case, the downlink data in the Packet Data Convergence Protocol (PDCP) layer may be duplicated in a plurality of downlink data in the Radio Link Control (RLC) layer or the MAC layer. In this case, the plurality of downlink data may be scheduled as the same MAC PDU or TB, and soft combining may be performed.

Here, the cell group (CG) includes the primary cell (PCell) or the primary secondary cell (PSCell), and may also include a secondary cell (SCell). The cell group may be provided for each MAC entity. The PUCCH group includes one or more cells, and includes one cell (for example, the PCell or the PSCell) that transmits the PUCCH.

Note that the repetition of the PDSCH across CGs or PUCCH groups may be enabled in the case of duplication to a plurality of downlink data in the PDCP layer. In this case, the plurality of downlink data may also be scheduled separately as different MAC PDUs or TBs. In other words, soft combining of the plurality of downlink data does not have to be performed.

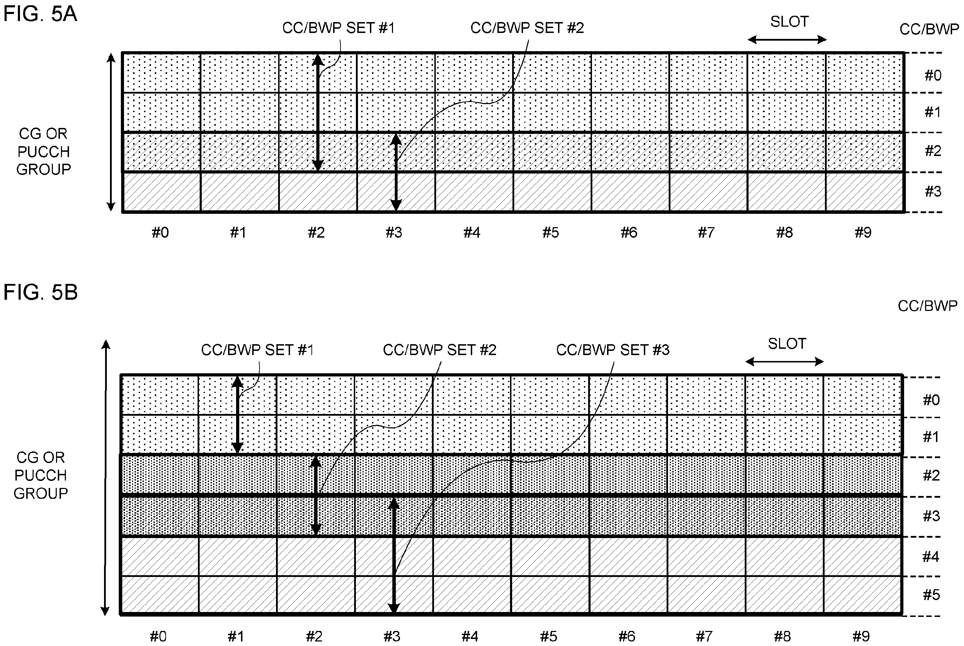

Figs. 5A and 5B are diagrams illustrating an example of frequency bands for transmitting the repetition of the PDSCH according to the first aspect. Fig. 5A illustrates a CG or PUCCH group including CC/BWPs #0 to #3. Fig. 5B illustrates a CG or PUCCH group including CC/BWPs #0 to #5.

In Fig. 5A, a CC/BWP set #1 that includes CC/BWPs #0 to #2 and a CC/BWP set #2 that includes CC/BWPs #2 and #3 are illustrated. Similarly, in Fig. 5B, a CC/BWP set #1 that includes CC/BWPs #0 and #1, a CC/BWP set #2 that includes CC/BWPs #2 and #3, and a CC/BWP set #3 that includes CC/BWPs #3 to #5 are illustrated.

As illustrated in Figs. 5A and 5B, at least one CC may be repeatedly included in a plurality of CC/BWP sets. For example, in Fig. 5A, CC #2 is included in both the CC/BWP sets #1 and #2. Also, in Fig. 5B, CC #3 is included in both the CC/BWP set #2 and the CC/BWP set #3.

The user terminal in which a CC/BWP set is configured monitors the CORESET (SS set) in the CC/BWPs included in the CC/BWP set. The user terminal may also control the receiving of each repetition of the PDSCH scheduled in at least a portion of the CC/BWP set, on the basis of each DCI detected by monitoring.

Note that the CC/BWP in which each repetition of the PDSCH is scheduled may also be an active CC/BWP among the configured CC/BWPs.

### <Duration configured for transmission of repetition>

Also, in the first aspect, a duration (for example, one or more slots) for transmitting the repetition of the PDSCH (TB) may be prescribed in advance or configured by higher layer signaling in the user terminal. The duration may be the duration from the first repetition to the last repetition of the PDSCH, or the duration from the PDCCH scheduling the PDSCH to the last repetition, for example. Alternatively, the duration may be a given duration from the receiving of the PDCCH scheduling the repetition or the first repetition of the PDSCH (for example, a time interval corresponding to one or more slots in a specific subcarrier spacing (SCS), or one millisecond (ms) or multiple milliseconds (multiple-ms)).

The user terminal does not have to expect to receive a repetition outside the configured duration (for example, after the duration). In the case of transmitting a repetition of the PDSCH to specific user terminal, the radio base station controls the repetition such that the PDSCH is transmitted inside the duration prescribed in advance or configured by higher layer signaling.

A Layer 2 timer may be prescribed on the basis of the duration. For example, the timer may be a MAC timer such as a timer (HARQ RTT timer) for the round-trip time (RTT) of the HARQ or a timer (configured grant timer) for the configured grant.

For example, because retransmission may be scheduled when the HARQ RTT timer expires, the length of the HARQ RTT timer (the length of time from activation to expiration) may be determined on the basis of the duration. Also, because a PDSCH ACK is assumed when the configured grant timer expires, the length of the configured grant timer (the length of time from activation to expiration) may be determined on the basis of the duration. The user terminal may also receive information indicating the length of each timer.

Alternatively, each of the above timers may prescribe the duration. For example, the interval until the HARQ RTT timer expires may be treated as the duration, and the user terminal may assume that the repetition of the PDSCH will be transmitted only during the duration. As another example, the interval until the configured grant timer expires may be treated as the duration, and the user terminal may assume that the repetition will be transmitted only during the duration.

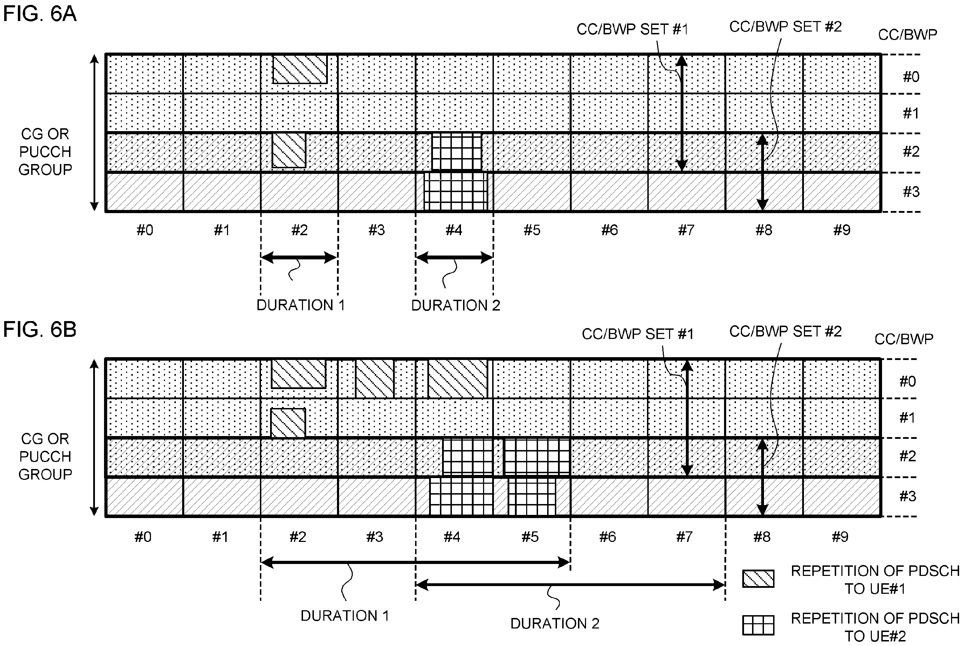

Figs. 6A and 6B are diagrams illustrating an example of the frequency band for transmitting the repetition of the PDSCH according to the first aspect. Like Fig. 5A, the case where the CC/BWP sets #1 and #2 are configured will be described as an example in Figs. 6A and 6B.

Figs. 6A and 6B differ from Fig. 5A in that a duration (for example, one or more slots) for transmitting the repetition of the PDSCH is configured in addition to the frequency bands (for example, a CC/BWP set) for transmitting the repetition of the PDSCH. Hereinafter, the points that differ from Fig. 5A will be described mainly.

As illustrated in Fig. 6A, a duration 1 that includes slot #2 for transmitting the repetition of the PDSCH is configured in the user terminal #1 in which the CC/BWP set #1 is configured. Each repetition of the PDSCH for the user terminal #1 may be scheduled in at least a portion of the duration 1.

On the other hand, a duration 2 that includes slot #4 for transmitting the repetition of the PDSCH is configured in the user terminal #2 in which the CC/BWP set #2 is configured. Each repetition of the PDSCH for the user terminal #2 may be scheduled in the duration 2 and also in at least a portion of the CC/BWP set #2 (here, the CC/BWPs #2 and #3).

Note that in Fig. 6A, different durations are configured respectively for the user terminal #1 and #2 in which different CC/BWP sets are configured, but as illustrated in Fig. 6B, durations that overlap at least partially may also be configured. For example, in Fig. 6B, a duration 1 that includes slots #2 to #5 is configured for the user terminal #1 in which the CC/BWP #1 is configured. A duration 2 that includes slots #4 to #7 is configured for the user terminal #2 in which the CC/BWP #2 is configured.

In Fig. 6B, the repetitions of the PDSCH for the user terminal #1 and #2 are scheduled in at least a portion of the respectively configured durations 1 and 2. As illustrated in Fig. 6B, the repetition of the PDSCH for the user terminal #1 and #2 may be scheduled in different CC/BWPs in the same slot (here, slot #4s).

### <User terminal capability information>

In the first aspect, the user terminal may also transmit, to a TRP, information indicating at least one of one or more frequency bands (for example, one or more sets of CC/BWPs) and a duration configurable for transmitting the repetition of the PDSCH. The information indicating at least one of one or more frequency bands and a duration may also be reported to the TRP as part of the user terminal capability information.

As above, in the first aspect, because the transmission of the repetition of the PDSCH is flexibly controlled, gain can be obtained efficiently through the repetition.

### (Second aspect)

In the second aspect, the soft combining of downlink data transmitted through repetition of the PDSCH will be described.

Here, soft combining refers to transmitting a plurality of data generated from the same information bit sequence and assigned the same HPN, such that the receiver combines the plurality of data having the same HPN. The user terminal may also have a buffer (soft buffer) that temporarily saves received data whose decoding has failed. In the soft buffer, received data (for example, a TB, a code block, or a code block group (CBG) that includes one or more code blocks) may be saved for each HPN.

The user terminal may also soft-combine the received data (or retransmitted data) having the same HPN through repetition. In addition, the user terminal may also soft-combine data stored in the soft buffer with received data having the same HPN.

In the second aspect, the user terminal may also receive information related to whether or not to soft-combine a plurality of data obtained through the repetition of the PDSCH in L1 (also referred to by names such as the physical layer or the lower layer). This information may be configured in the user terminal from the TRP by higher layer signaling, for example.

In the case where soft combining in L1 is configured in the user terminal, the user terminal may also receive information indicating which PDSCH the data is a repetition of (that is, which PDSCH is to be soft-combined). This information may also be included in the DCI, for example.

The user terminal may also control the soft combining of the PDSCH scheduled by different DCI for each repetition on the basis of the DCI. Specifically, the user terminal may control the soft combining of the PDSCH being repeated on the basis of the HPN or a counter downlink assignment index (counter DAI) indicated by a given field in the DCI.

### <Case based on HPN>

The user terminal may also control the soft combining of the PDSCH scheduled by different DCI for each repetition on the basis of the HPN indicated by a given field (for example, an HPN field) in the DCI.

Specifically, if (the value of) the HPN of a plurality of PDSCH respectively scheduled by different DCI in a same duration (for example, the same slot) is the same (that is, if the HPN indicated by a given field in the different DCI is the same), the user terminal may soft-combine the plurality of PDSCH. On the other hand, if (the value of) the HPN is different, the user terminal does not have to soft-combine the plurality of PDSCH.

Note that soft combining may also be applied to PDSCH repeated across one or more frequency bands (for example, one or more CCs or one or more BWPs). Additionally, soft combining may also be applied within a same duration for repetition configured in the user terminal.

The user terminal may also receive information indicating an HPN for transmitting the repetition of the PDSCH. For example, this information may be configured in the user terminal from the TRP by higher layer signaling.

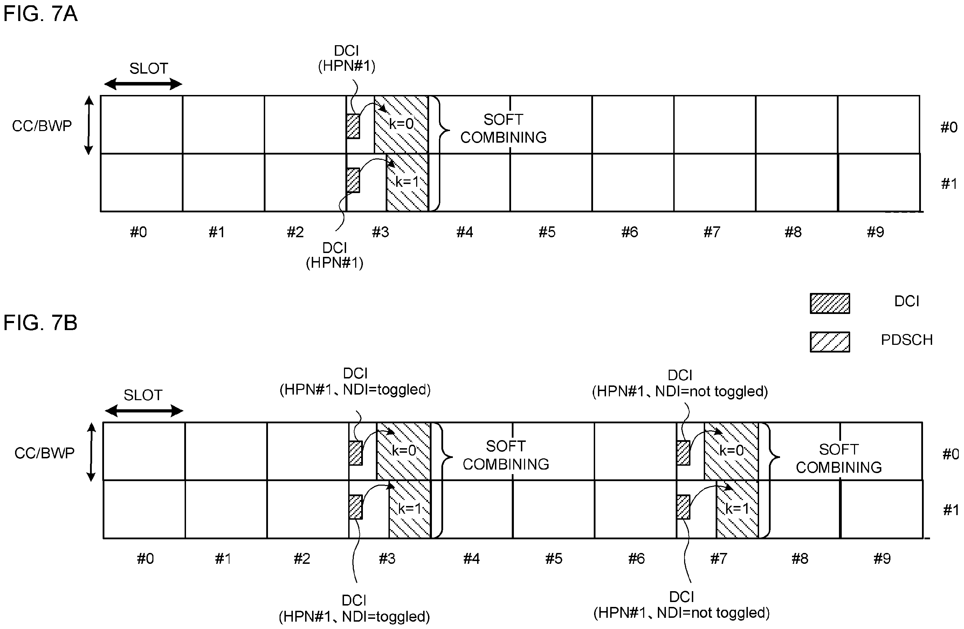

Figs. 7A and 7B are diagrams illustrating an example of soft combining based on the HPN according to the second aspect. In Figs. 7A and 7B, HPN #1 is assumed to be configured in the user terminal as the HPN for the repetition of the PDSCH. Also, in Figs. 7A and 7B, a CC/BWP set including CCs/BWPs #0 and #1 is assumed to be configured in the user terminal for the repetition of the PDSCH.

For example, in Fig. 7A, the PDSCH with the repetition index k = 0, 1 is scheduled respectively in the CCs/BWPs #0 and #1 in the same slot. In Fig. 7A, in the user terminal, the given fields of the DCI scheduling each of the PDSCH with the repetition index k = 0, 1 indicates the same HPN #1. For this reason, the user terminal soft-combines the data (for example, a TB, CB, or CBG) transmitted by the PDSCH with the repetition index k = 0, 1.

Also, the user terminal may assume that a new data indicator (NDI) respectively indicated by a plurality of DCI scheduling the PDSCH with different repetition indices k is consistent. In other words, the NDI indicated by all DCI scheduling the same data (for example, a TB, CB, or CBG) may be toggled in common, but do not have to be toggled together.

Alternatively, the user terminal may assume that a certain situation, namely that some of the NDI indicated by all DCI scheduling the same data (for example, a TB, CB, or CBG) are toggled while others are not toggled, will not occur. The radio base station is configured not to cause some of the NDI indicated by all DCI scheduling the same data (for example, a TB, CB, or CBG) to be toggled while others are not toggled.

For example, in Fig. 7B, an initial transmission with the repetition index k = 0, 1 is performed in slot #3, and a retransmission with the repetition index k = 0, 1 is performed in slot #7. For this reason, the NDI in the two DCI scheduling each of the PDSCH with the repetition index k = 0, 1 in slot #3 are toggled in common. On the other hand, the NDI in the two DCI scheduling each of the PDSCH with the repetition index k = 0, 1 in slot #7 are not toggled together.

Note that in Fig. 7B, in the case where a decoding failure occurs after soft-combining the data transmitted by the PDSCH with the repetition index k = 0, 1 in slot #3, the user terminal may also store the combined result in the soft buffer. Also, the user terminal may additionally soft-combine the data transmitted by the PDSCH with the repetition index k = 0, 1 retransmitted in slot #7 with the combined result stored in the soft buffer.

In this way, the user terminal may soft-combine data with different repetition indices of the repetition factor K. The user terminal may also soft-combine the data of the initial transmission of a repetition and the retransmission of a repetition.

### <Case based on counter DAI>

The user terminal may also control the soft combining of the PDSCH scheduled by different DCI for each repetition on the basis of the counter DAI indicated by a given field (for example, a counter DAI field) in the DCI.

Specifically, if (the value of) the counter DAI of a plurality of PDSCH respectively scheduled by different DCI in at least one of consecutive frequency bands (for example, CCs/BWPs) and consecutive durations (for example, slots) is the same (that is, if the counter DAI indicated by a given field in the different DCI is the same), the user terminal may soft-combine the plurality of PDSCH. On the other hand, if (the value of) the counter DAI is different, the user terminal does not have to soft-combine the plurality of PDSCH.

Here, the counter DAI refers to a cumulative value of the scheduled data. Generally, a different value counted for each CC is configured in the counter DAI with respect to a plurality of PDSCH scheduled in different CC within a given duration. A HARQ-ACK is fed back to each of the plurality of PDSCH with different values of the counter DAI.

On the other hand, in the case of transmitting the repetition of the PDSCH across at least one of a plurality of frequency bands (for example, CCs/BWPs) and a plurality of durations (for example, slots), it is desirable to feed back a single HARA-ACK according to the soft combining (combined) result of the plurality of repetitions, rather than feeding back a HARQ-ACK to each of the plurality of repetitions for which at least one of the frequency band and the duration is different.

Accordingly, whether or not the PDSCH corresponding to a plurality of repetitions should be soft-combined may also be indicated by the value of the counter DAI in the plurality of DCI scheduling each of the plurality of repetitions for which at least one of the frequency band and the duration is different. In other words, the case where the counter DAIs have the same value indicates that soft combining is to be applied, whereas the case where the counter DAIs have different values indicates that soft combining is not to be applied.

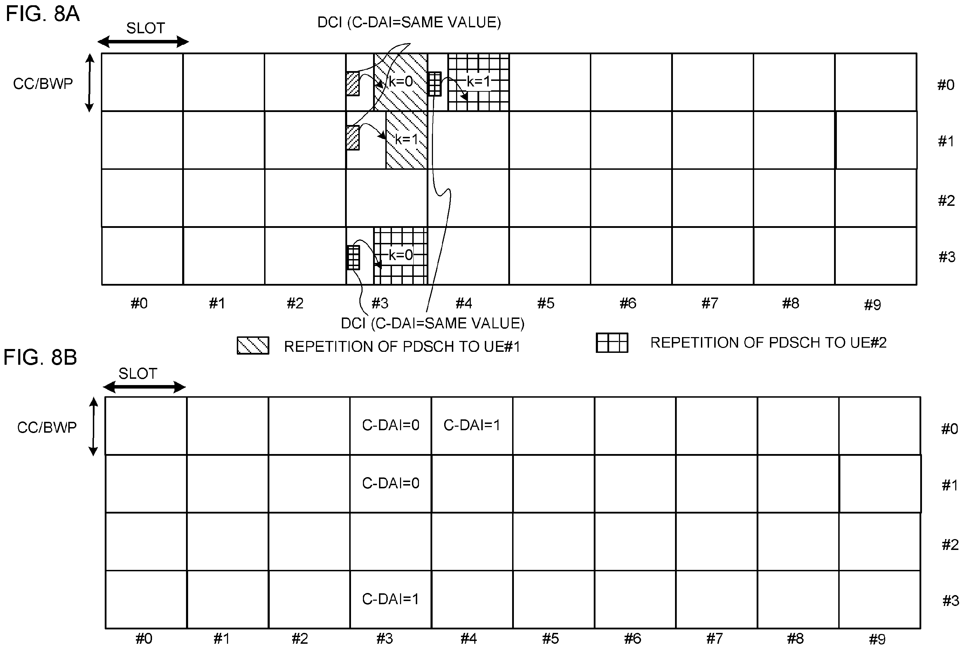

Figs. 8A and 8B are diagrams illustrating an example of soft combining based on the counter DAI according to a second aspect. In Fig. 8A, PDSCH with the repetition factor K = 2 for the user terminal #1 and #2 are illustrated as an example.

For example, in Fig. 8A, the same counter DAI (C-DAI) is indicated by the two DCI scheduling the PDSCH with the repetition index k = 0, 1 for the user terminal #1. Similarly, the same counter DAI is indicated by the two DCI scheduling the PDSCH with the repetition index k = 0, 1 for the user terminal #2. Fig. 8B illustrates an example of the values of the counter DAI indicated by a given field in each DCI illustrated in Fig. 8A.

For example, in slot #3 of Fig. 8A, the same counter DAI "0" (see Fig. 8B) is indicated by the two DCI scheduling each of the PDSCH with the repetition index k = 0, 1 in the consecutive CCs/BWPs #0 and #1. For this reason, the user terminal #1 may soft-combine the PDSCH with the repetition index k = 0, 1 scheduled in the consecutive CCs/BWPs #0 and #1.

In addition, in the consecutive slots #3 and #4 of Fig. 8A, the same counter DAI "1" (see Fig. 8B) is indicated by the two DCI scheduling each of the PDSCH with the repetition index k = 0, 1 in the non-consecutive CCs/BWPs #3 and #1. For this reason, the user terminal #2 may soft-combine the PDSCH with the repetition index k = 0, 1 scheduled in the consecutive slots #3 and #4.

Note that Fig. 8A is used to describe an example in which a plurality of PDSCH scheduled in frequency bands (for example, CCs/BWPs) having consecutive indices or durations (for example, slots) having consecutive indices are soft-combined on the basis of the counter DAI, but the configuration is not limited thereto. A plurality of PDSCH scheduled in frequency bands having consecutive indices and durations having consecutive indices (for example, the CC/BWP #0 in slot #3 and the CC/BWP #1 in slot #4) may also be soft-combined on the basis of the counter DAI.

Also, in Fig. 8A, a given field (for example, the HPN field) in the plurality of DCI indicating the same counter DAI may also indicate the same HPN. In this case, the user terminal may also control the soft combining of the PDSCH with different repetition indices k scheduled by the plurality of DCI on the basis of which counter DAI or HPN is indicated by the plurality of DCI.

Alternatively, in Fig. 8A, the HPNs indicated by a given field (for example, the HPN field) in the plurality of DCI indicating the same counter DAI do not necessarily have to be the same. For example, respectively different HPNs may be assigned to the PDSCH with the repetition index k = 0, 1 for the user terminal #1 in Fig. 8A. In this case, the user terminal only have to control the soft combining of the PDSCH with different repetition indices k scheduled by the plurality of DCI on the basis of which counter DAI is indicated by the plurality of DCI.

### <Case based on value of new field in DCI>

The user terminal may also control the soft combining of the PDSCH scheduled by different DCI for each repetition on the basis of the value of a given field in the DCI.

A value of a given field (for example, one bit) in the DCI may also indicate whether or not to perform soft combining, for example. Furthermore, in addition to indicating whether or not to perform soft combining, the value of the given field in the DCI may also indicate the number of remaining repetitions or the n-value of the current repetition (for example, the repetition index k).

### <Case based on code rate>

The user terminal may also control the soft combining of the PDSCH scheduled by different DCI for each repetition on the basis of the code rate of the PDSCH. The user terminal may determine the code rate on the basis of the Modulation and Coding Sheme (MCS) index in the DCI.

In the case where the determined code rate is lower than a given threshold (or less than or equal to a given threshold), the user terminal does not have to soft-combine the plurality of PDSCH respectively scheduled by different DCI for each repetition.

On the other hand, in the case where the determined code rate is the given threshold or greater (or higher than the given threshold), the user terminal may soft-combine the plurality of PDSCH respectively scheduled by different DCI for each repetition. In this case, the user terminal may control the soft combining of the plurality of PDSCH on the basis of the DCI (for example, on the basis of at least one of the HPN, the counter DAI, and the value of the new field described above).

With the above arrangement, it is no longer necessary to use a specific bit field for enabling or disabling soft combining, thereby making flexible control possible. In cases where the code rate is sufficiently low, the effect of soft combining decreases, whereas in sufficiently high cases the effect of soft combining increases.

Alternatively, in the case where the determined code rate is the given threshold or smaller (or less than or equal to the given threshold), the user terminal may soft-combine the plurality of PDSCH respectively scheduled by different DCI for each repetition. In this case, the user terminal may control the soft combining of the plurality of PDSCH on the basis of the DCI (for example, on the basis of at least one of the HPN, the counter DAI, and the value of the new field described above).

On the other hand, in the case where the determined code rate is equal to or greater than a given threshold (or equal to or higher than a given threshold), the user terminal does not have to soft-combine the plurality of PDSCH respectively scheduled by different DCI for each repetition.

With the above arrangement, it is no longer necessary to use a specific bit field for enabling or disabling soft combining, thereby making flexible control possible. In cases where the code rate is sufficiently low, quality improvement through retransmission control is important, and therefore the importance of soft combining increases, whereas in low cases, the importance of soft combining decreases.

According to the second aspect, the soft combining of the PDSCH scheduled by different DCI for each repetition can be controlled appropriately on the basis of the DCI.

### (Other aspects)

In the first and second aspects, the PDSCH of each repetition (each repetition index k) is described as being placed in the CORESET (or SS set) inside the same frequency band as the frequency band (for example, CC/BWP) in which the PDSCH is scheduled, but the configuration is not limited thereto.

The PDSCH of each repetition may also be placed in the CORESET (or SS set) inside the same frequency band as the frequency band (for example, CC/BWP) where the PDSCH is scheduled. In other words, the PDSCH of each repetition may also be scheduled by cross-carrier (cross-CC) or cross-BWP (cross-CC/BWP) scheduling.

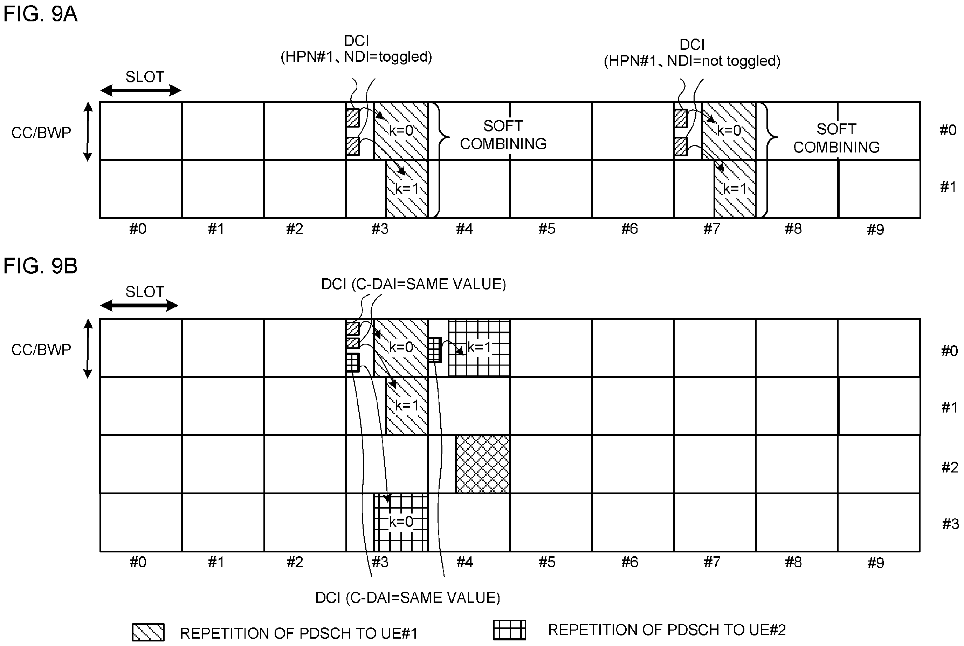

Figs. 9A and 9B are diagrams illustrating an example of cross-CC/BWP scheduling according to another aspect. Fig. 9A differs from Fig. 7A in that the PDSCH with the repetition index k = 1 is scheduled by cross-CC/BWP scheduling, but otherwise the diagrams are similar. In this way, in the case of controlling the soft combining of the PDSCH scheduled by different DCI for each repetition on the basis of the HPN indicated by the DCI, the PDSCH may also be scheduled by cross-CC/BWP scheduling.

Also, Fig. 9B differs from Fig. 8A in that the PDSCH with the repetition index of 1 for the user terminal #1 and the PDSCH with the repetition index of 0 for the user terminal #2 are each scheduled by cross-CC/BWP scheduling, but otherwise the diagrams are similar. In this way, in the case of controlling the soft combining of the PDSCH scheduled by different DCI for each repetition on the basis of the counter DAI indicated by the DCI, the PDSCH may also be scheduled by cross-CC/BWP scheduling.

Similarly, cross-CC/BWP scheduling may be applied in the case of controlling soft combining on the basis of a code rate determined by the value of a new field in the DCI or by the MCS index.

Also, at least one of the first and second aspects may also be applied to semi-persistent scheduling (SPS) of the PDSCH. In the case of SPS, the repetition of the PDSCH may be performed within a single configuration or across a plurality of configurations. At least one of the first and second aspects above may also be used to identify which transmission is a part of a repetition applied to SPS.

Also, at least one of the first and second aspects may be applied to the transmission of the PUSCH on an uplink grant (for example, DCI format 0_0 or 0_1) or a configured grant of the PUSCH. In the case of SPS, the repetition of the PDSCH may be performed within a single configuration or across a plurality of configurations. At least one of the first and second aspects above may also be used to identify which transmission is a part of a repetition applied to GASPS.

### (Radio Communication System)

Now, the configuration of a radio communication system according to the present embodiment will be described below. In this radio communication system, communication is performed using one or a combination of the radio communication methods according to the embodiments of the present disclosure.

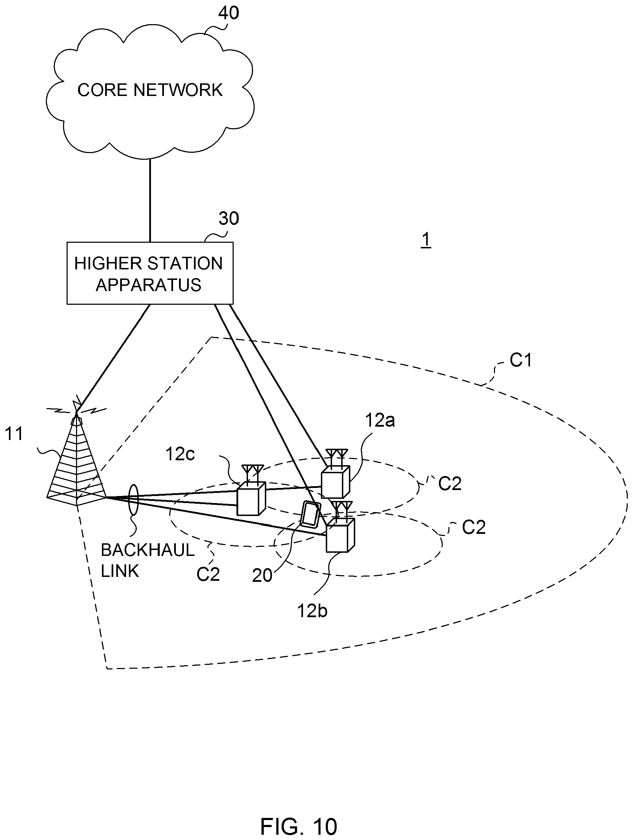

Fig. 10 is a diagram to show an example of a schematic configuration of the radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "Long Term Evolution (LTE)", "LTE-Advanced (LTE-A)", "LTE-Beyond (LTE-B)", "SUPER 3G", "IMT-Advanced", "4th generation mobile communication system (4G)", "5th generation mobile communication system (5G)", "New Radio (NR)", "Future Radio Access (FRA)", "New-RAT (Radio Access Technology)", and so on, or may be referred to as a system to implement these.

The radio communication system 1 includes a radio base station 11 that forms a macro cell C1 covering a relatively wide coverage, and radio base stations 12 (12a to 12c) that are placed within the macro cell C1 and that form small cells C2, which are narrower than the macro cell C1. Also, user terminal 20 is placed in the macro cell C1 and in each small cell C2. The arrangement, number, and so on of cells and user terminal 20 are not limited to the aspects illustrated in the drawings.

The user terminal 20 can connect with both the radio base station 11 and the radio base stations 12. It is assumed that the user terminal 20 uses the macro cell C1 and the small cells C2 at the same time using CA or DC. Furthermore, the user terminal 20 may apply CA or DC using a plurality of cells (CCs).

Between the user terminal 20 and the radio base station 11, communication can be carried out using a carrier of a relatively low frequency band (for example, 2 GHz) and a narrow bandwidth (referred to as an "existing carrier", a "legacy carrier", and so on). Meanwhile, between the user terminal 20 and the radio base stations 12, a carrier of a relatively high frequency band (for example, 3.5 GHz, 5 GHz, and so on) and a wide bandwidth may be used, or the same carrier as that used between the user terminal 20 and the radio base station 11 may be used. Note that the configuration of the frequency band for use in each radio base station is by no means limited to these.

Moreover, the user terminal 20 can perform communication in each cell using time division duplex (TDD) and/or frequency division duplex (FDD). Further, in each cell (carrier), a single numerology may be applied, or a plurality of different numerologies may be applied.

The numerology may be a communication parameter applied to transmission and/or reception of a signal and/or channel, and may indicate, for example, at least one of subcarrier spacing, bandwidth, symbol length, cyclic prefix length, subframe length, TTI length, number of symbols per TTI, radio frame configuration, specific filtering processing performed by a transceiver in a frequency domain, specific windowing processing performed by a transceiver in a time domain, and so on. For example, for a certain physical channel, when the subcarrier spacing differs and/or the numbers of OFDM symbols are different between the constituent OFDM symbols, this case may be described that they are different in numerology.

The radio base station 11 and the radio base station 12 (or between 2 radio base stations 12) may be connected by wire (for example, means in compliance with the common public radio interface (CPRI) such as optical fiber, an X2 interface, and so on) or wirelessly.

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME), and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station", an "aggregate node", an "eNodeB (eNB)", a "transmitting/receiving point", and so on. Also, the radio base stations 12 are radio base stations having local coverages, and may be referred to as "small base stations", "micro base stations", "pico base stations", "femto base stations", "Home eNodeBs (HeNBs)", "Remote Radio Heads (RRHs)", "transmitting/receiving points", and so on. Hereinafter the radio base stations 11 and 12 will be collectively referred to as "radio base stations 10", unless specified otherwise.

The user terminal 20 is terminals to support various communication schemes such as LTE, LTE-A, and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes can be used as well.

In the radio communication system 1, a downlink shared channel (Physical Downlink Shared CHannel (PDSCH)), which is used by each user terminal 20 on a shared basis, a broadcast channel (Physical Broadcast CHannel (PBCH)), downlink L1/L2 control channels, and so on are used as downlink channels. User data, higher layer control information and System Information Blocks (SIBs) are transmitted in the PDSCH. Further, Master Information Block (MIB) is transmitted by PBCH.

The downlink L1/L2 control channels include a Physical Downlink Control CHannel (PDCCH), an Enhanced Physical Downlink Control CHannel (EPDCCH), a Physical Control Format Indicator CHannel (PCFICH), a Physical Hybrid-ARQ Indicator CHannel (PHICH), and so on. Downlink control information (DCI), including PDSCH and/or PUSCH scheduling information, and so on, is transmitted by the PDCCH.

DCI that schedules receipt of downlink data may also be referred to as "DL assignment", and DCI that schedules transmission of UL data may also be referred to as "UL grant".

The number of OFDM symbols to use for the PDCCH is communicated by the PCFICH. Hybrid Automatic Repeat reQuest (HARQ) delivery acknowledgment information (also referred to as, for example, "retransmission control information", "HARQ-ACKs", "ACK/NACKs", and so on) in response to the PUSCH is communicated by the PHICH. The EPDCCH is frequency-division-multiplexed with the PDSCH (downlink shared data channel) and used to communicate DCI and so on, like the PDCCH.

In the radio communication system 1, an uplink shared channel (Physical Uplink Shared CHannel (PUSCH)), which is used by each user terminal 20 on a shared basis, an uplink control channel (Physical Uplink Control CHannel (PUCCH)), a random access channel (Physical Random Access CHannel (PRACH)), and so on are used as uplink channels. User data, higher layer control information, and so on are communicated by the PUSCH. Also, in the PUCCH, downlink radio quality information (Channel Quality Indicator (CQI)), delivery acknowledgment information, scheduling requests (SRs), and so on are communicated. By means of the PRACH, random access preambles for establishing connections with cells are communicated.

In the radio communication systems 1, cell-specific reference signal (CRSs), channel state information reference signal (CSI-RSs), demodulation reference signal (DMRSs), positioning reference signal (PRSs), and so on are communicated as downlink reference signals. Also, in the radio communication system 1, measurement reference signals (Sounding Reference Signals (SRSs)), demodulation reference signals (DMRSs), and so on are communicated as uplink reference signals. Note that, DMRSs may be referred to as "user terminal specific reference signals (UE-specific Reference Signals)". Also, the reference signals to be communicated are by no means limited to these.

### <Radio Base Station>

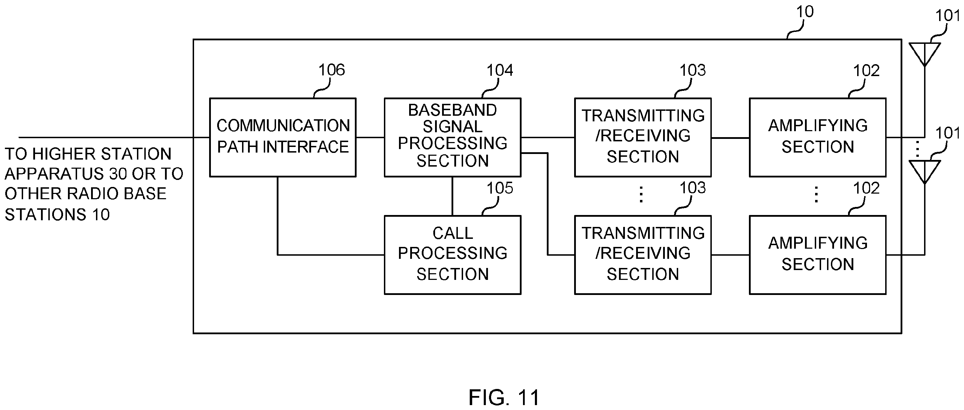

Fig. 11 is a diagram to show an example of an overall configuration of the radio base station according to the present embodiment. The radio base station 10 includes a plurality of transmitting/receiving antennas 101, amplifying sections 102, and transmitting/receiving sections 103, a base band signal processing section 104, a call processing section 105, and a communication path interface 106. Note that one or more transmitting/receiving antennas 101, amplifying sections 102, and transmitting/receiving sections 103 may be provided.

User data to be transmitted from the radio base station 10 to user terminal 20 on the downlink is input from the higher station apparatus 30 to the base band signal processing section 104, via the communication path interface 106.

In the base band signal processing section 104, the user data is subjected to transmission processes, including a Packet Data Convergence Protocol (PDCP) layer process, division and coupling of the user data, Radio Link Control (RLC) layer transmission processes such as RLC retransmission control, Medium Access Control (MAC) retransmission control (for example, a Hybrid Automatic Repeat reQuest (HARQ) transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and an inverse fast Fourier transform, and forwarded to the transmitting/receiving sections 103.

Each of the transmitting/receiving sections 103 converts a base band signal, which is pre-coded for each antenna and output from the base band signal processing section 104, into a signal in a radio frequency band, and transmits such a radio frequency signal. A radio frequency signal subjected to the frequency conversion in each transmitting/receiving section 103 is amplified in the amplifying section 102, and transmitted from each transmitting/receiving antenna 101. The transmitting/receiving sections 103 can be constituted by a transmitter/receiver, a transmitting/receiving circuit, or a transmitting/receiving apparatus that can be described based on general understanding of the technical field to which the present disclosure pertains. Note that a transmitting/receiving section 103 may be configured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the base band signal through frequency conversion in the transmitting/receiving sections 103 and output to the base band signal processing section 104.

In the base band signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface 106 transmits and receives signals to and from the higher station apparatus 30 via a given interface. Also, the communication path interface 106 may transmit and receive signals (backhaul signaling) with other radio base stations 10 via an interbase station interface (which is, for example, optical fiber that is in compliance with the CPRI (Common Public Radio Interface), the X2 interface, etc.).

Note that the transmitting/receiving section 103 may further include an analog beamforming section that performs analog beamforming. The analog beamforming section may be composed of an analog beam forming circuit (for example, a phase shifter, a phase shift circuit) or an analog beam forming device (for example, a phase shifter), which is described based on common understanding in the technical field according to the present invention. Further, the transmitting/receiving antenna 101 may be composed of an array antenna, for example.

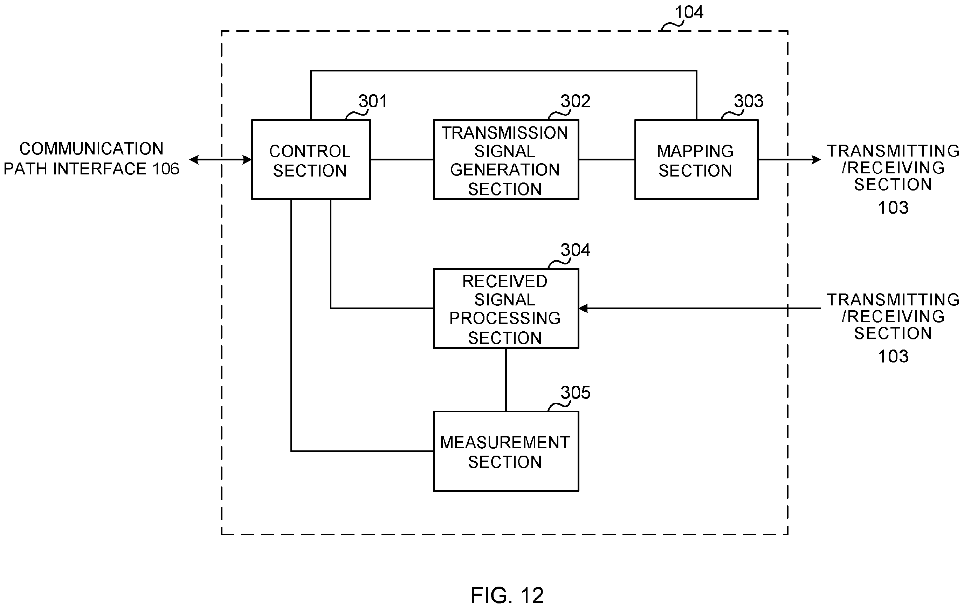

Fig. 12 is a diagram to show an example of a functional configuration of the radio base station according to the present embodiment. Note that, although this example will primarily show functional blocks that pertain to characteristic parts of the present embodiment, the radio base station 10 may be assumed to have other functional blocks that are necessary for radio communication as well.

The base band signal processing section 104 at least has a control section (scheduler) 301, a transmission signal generation section 302, a mapping section 303, a received signal processing section 304, and a measurement section 305. Note that these configurations have only to be included in the radio base station 10, and some or all of these configurations may not be included in the base band signal processing section 104.

The control section (scheduler) 301 controls the whole of the radio base station 10. The control section 301 can be constituted by a controller, a control circuit, or a control apparatus that can be described based on general understanding of the technical field to which the present disclosure pertains.

For example, the control section 301 controls the generation of signals in the transmission signal generation section 302, the allocation of signals in the mapping section 303, and the like. Furthermore, the control section 301 controls the signal receiving processes in the received signal processing section 304, the measurements of signals in the measurement section 305, and so on.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, and delivery acknowledgement information). The control section 301 controls the generation of downlink control signals, downlink data signals, and so on, based on the results of deciding whether or not retransmission control is necessary for uplink data signals, and so on.

The control section 301 controls the scheduling of synchronization signals (for example, the Primary Synchronization Signal (PSS)/Secondary Synchronization Signal (SSS)), SSB, downlink reference signals (for example, the CRS, the CSI-RS, the DMRS, etc.), and so on.

The control section 301 controls the scheduling for uplink data signals (for example, signals transmitted in the PUSCH), uplink control signals (for example, signals that are transmitted in the PUCCH and/or the PUSCH, and delivery acknowledgement information), random access preambles (for example, signals transmitted in the PRACH), uplink reference signals, and the like.

The control section 301 may perform control to form a transmission beam and/or a reception beam using a digital BF (for example, precoding) in the base band signal processing section 104 and/or an analog BF (for example, phase rotation) in the transmitting/receiving section 103. The control section 301 may perform control to form the beams based on downlink propagation path information, uplink propagation path information, and the like. These pieces of propagation path information may be acquired from the received signal processing section 304 and/or the measurement section 305.

The transmission signal generation section 302 generates downlink signals (downlink control signals, downlink data signals, downlink reference signals, and so on) based on instructions from the control section 301, and outputs these signals to the mapping section 303. The transmission signal generation section 302 can be constituted by a signal generator, a signal generating circuit, or a signal generation apparatus that can be described based on general understanding of the technical field to which the present disclosure pertains.

For example, the transmission signal generation section 302 generates DL assignments, which report downlink data allocation information, and/or UL grants, which report uplink data allocation information, based on instructions from the control section 301. DL assignments and UL grants are both DCI, and follow the DCI format. Also, the downlink data signals are subjected to the coding process, the modulation process, and so on, by using code rates and modulation schemes that are determined based on, for example, channel state information (CSI) reported from each user terminal 20.

The mapping section 303 maps the downlink signals generated in the transmission signal generation section 302 to given radio resources based on instructions from the control section 301, and outputs these to the transmitting/receiving sections 103. The mapping section 303 can be constituted by a mapper, a mapping circuit, or a mapping apparatus that can be described based on general understanding of the technical field to which the present disclosure pertains.

The received signal processing section 304 performs receiving processes (for example, demapping, demodulation, decoding, and so on) of received signals that are input from the transmitting/receiving sections 103. Here, the received signals include, for example, uplink signals (uplink control signals, uplink data signals, uplink reference signals, etc.) that are transmitted from the user terminal 20. The received signal processing section 304 can be constituted by a signal processor, a signal processing circuit, or a signal processing apparatus that can be described based on general understanding of the technical field to which the present disclosure pertains.

The received signal processing section 304 outputs, to the control section 301, information decoded by the receiving processing. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit, or a measurement apparatus that can be described based on general understanding of the technical field to which the present disclosure pertains.

For example, the measurement section 305 may perform Radio Resource Management (RRM) measurements, Channel State Information (CSI) measurements, and so on, based on the received signals. The measurement section 305 may measure the received power (for example, Reference Signal Received Power (RSRP)), the received quality (for example, Reference Signal Received Quality (RSRQ), Signal to Interference plus Noise Ratio (SINR), Signal to Noise Ratio (SNR), etc.), the signal strength (for example, Received Signal Strength Indicator (RSSI)), propagation path information (for example, CSI), and so on. The measurement results may be output to the control section 301.

Note that the transmitting/receiving sections 103 may also transmit downlink control information (DCI) (such as a DL assignment or an UL grant).

Also, the transmitting/receiving sections 103 may transmit a downlink shared channel that is repeatedly transmitted. Also, the transmitting/receiving sections 103 may transmit DCI used to schedule all repetitions of the downlink shared channel. Also, the transmitting/receiving sections 103 may transmit DCI used to schedule a given number of repetitions of the downlink shared channel.

Also, the transmitting/receiving sections 103 may transmit information related to at least one of a frequency band (for example, CC/BWP) and a duration used to transmit a repetition (first aspect).

Also, the control section 301 may control the repeated transmission of the downlink shared channel. Specifically, the control section 301 may control the generation of DCI (for example, the designation of information such as the HPN, the counter DAI, and the NDI) used to schedule a given number of repetitions of the downlink shared channel.

### <User terminal>

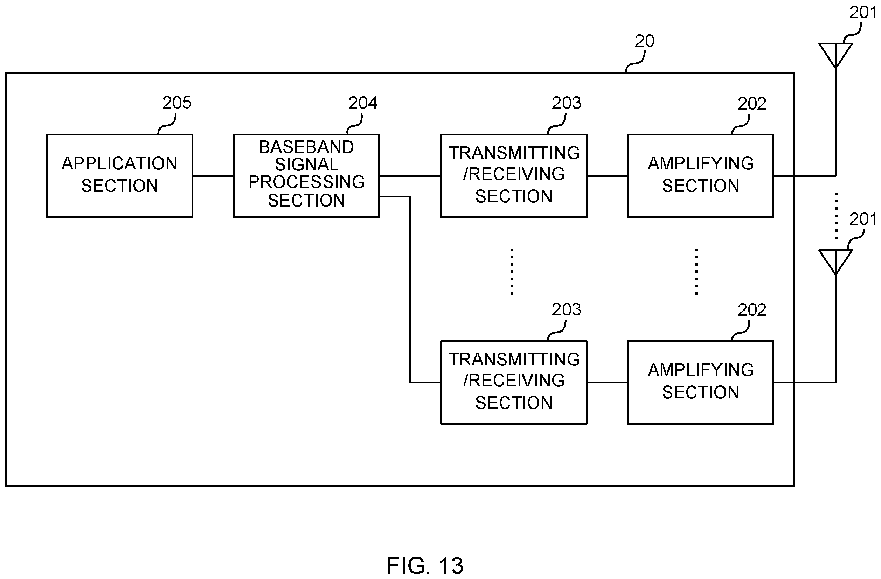

Fig. 13 is a diagram to show an example of an overall configuration of the user terminal according to the present embodiment. The user terminal 20 includes a plurality of transmitting/receiving antennas 201, amplifying sections 202, and transmitting/receiving sections 203, a base band signal processing section 204, and an application section 205. Note that one or more transmitting/receiving antennas 201, amplifying sections 202, and transmitting/receiving sections 203 may be provided.

Radio frequency signals that are received in the transmitting/receiving antennas 201 are amplified in the amplifying sections 202. The transmitting/receiving section 203 receives the downlink signal amplified in the amplifying section 202. The transmitting/receiving section 203 performs frequency conversion for the received signal into base band signal, and outputs the base band signal to the base band signal processing section 204. The transmitting/receiving section 203 can be constituted by a transmitter/receiver, a transmitting/receiving circuit, or a transmitting/receiving apparatus that can be described based on general understanding of the technical field to which the present disclosure pertains. Note that a transmitting/receiving section 203 may be configured as a transmitting/receiving section in one entity, or may be constituted by a transmitting section and a receiving section.

The base band signal processing section 204 performs receiving processes for the base band signal that is input, including an FFT process, error correction decoding, a retransmission control receiving process, and so on. Downlink user data is forwarded to the application section 205. The application section 205 performs processes related to higher layers above the physical layer and the MAC layer and so on. Also, in the downlink data, the broadcast information can be also forwarded to the application section 205.

Meanwhile, uplink user data is input from the application section 205 to the base band signal processing section 204. The base band signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

Base band signals that are output from the base band signal processing section 204 are converted into a radio frequency band in the transmitting/receiving sections 203 and transmitted. The radio frequency signals having been subjected to frequency conversion in the transmitting/receiving sections 203 are amplified in the amplifying sections 202, and transmitted from the transmitting/receiving antennas 201.

Note that the transmitting/receiving section 203 may further include an analog beamforming section that performs analog beamforming. The analog beamforming section may be composed of an analog beam forming circuit (for example, a phase shifter, a phase shift circuit) or an analog beam forming device (for example, a phase shifter), which is described based on common understanding in the technical field according to the present invention. Further, the transmitting/receiving antenna 201 may be composed of an array antenna, for example.

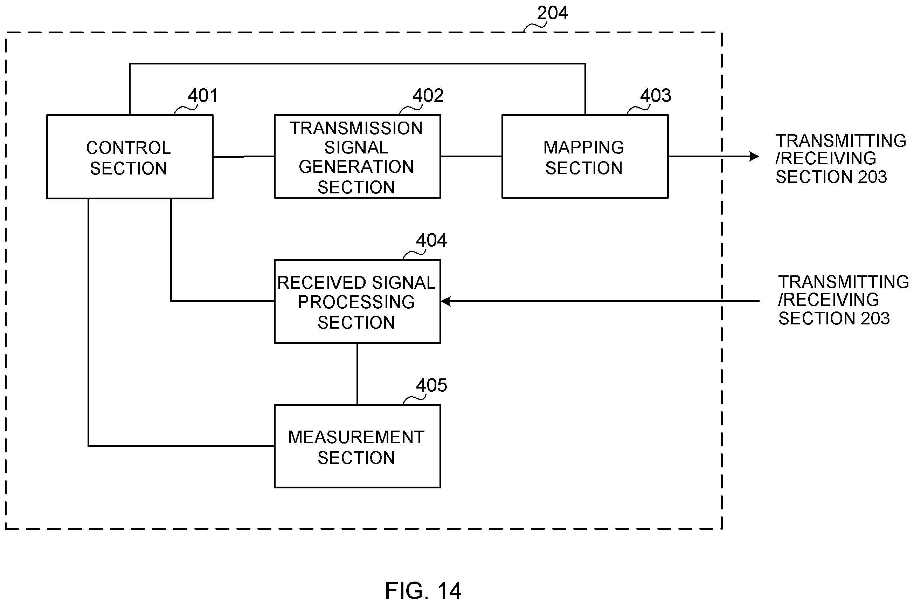

Fig. 14 is a diagram illustrating an example of a functional configuration of the user terminal according to the present embodiment. Note that, although this example will primarily show functional blocks that pertain to characteristic parts of the present embodiment, it may be assumed that the user terminal 20 has other functional blocks that are necessary for radio communication as well.

The base band signal processing section 204 provided in the user terminal 20 at least has a control section 401, a transmission signal generation section 402, a mapping section 403, a received signal processing section 404, and a measurement section 405. Note that these configurations may be included in the user terminal 20, and some or all of the configurations need not be included in the base band signal processing section 204.

The control section 401 controls the whole of the user terminal 20. The control section 401 can be constituted by a controller, a control circuit, or a control apparatus that can be described based on general understanding of the technical field to which the present disclosure pertains.

The control section 401, for example, controls the generation of signals in the transmission signal generation section 402, the allocation of signals in the mapping section 403, and so on. Furthermore, the control section 401 controls the signal receiving processes in the received signal processing section 404, the measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on the results of deciding whether or not retransmission control is necessary for the downlink control signals and/or downlink data signals, and so on.

The control section 401 may perform control to form a transmission beam and/or a reception beam using a digital BF (for example, precoding) in the base band signal processing section 204 and/or an analog BF (for example, phase rotation) in the transmitting/receiving section 203. The control section 401 may perform control to form the beams based on downlink propagation path information, uplink propagation path information, and so on. These pieces of propagation path information may be acquired from the received signal processing section 404 and/or the measurement section 405.

Further, when the control section 401 acquires various information reported from the radio base station 10 from the received signal processing section 404, the control section 401 may update the parameter used for control based on the information.

The transmission signal generation section 402 generates uplink signals (uplink control signals, uplink data signals, uplink reference signals, etc.) based on instructions from the control section 401, and outputs these signals to the mapping section 403. The transmission signal generation section 402 can be constituted by a signal generator, a signal generating circuit, or a signal generation apparatus that can be described based on general understanding of the technical field to which the present disclosure pertains.

For example, the transmission signal generation section 402 generates uplink control signals such as delivery acknowledgement information, channel state information (CSI), and so on, based on instructions from the control section 401. Also, the transmission signal generation section 402 generates uplink data signals based on instructions from the control section 401. For example, when a UL grant is included in a downlink control signal that is reported from the radio base station 10, the control section 401 instructs the transmission signal generation section 402 to generate an uplink data signal.

The mapping section 403 maps the uplink signals generated in the transmission signal generation section 402 to radio resources based on instructions from the control section 401, and outputs the result to the transmitting/receiving section 203. The mapping section 403 can be constituted by a mapper, a mapping circuit, or a mapping apparatus that can be described based on general understanding of the technical field to which the present disclosure pertains.

The received signal processing section 404 performs receiving processes (for example, demapping, demodulation, decoding, and so on) of received signals that are input from the transmitting/receiving sections 203. Here, the received signals include, for example, downlink signals (downlink control signals, downlink data signals, downlink reference signals, and so on) that are transmitted from the radio base station 10. The received signal processing section 404 can be constituted by a signal processor, a signal processing circuit, or a signal processing apparatus that can be described based on general understanding of the technical field to which the present disclosure pertains. Also, the received signal processing section 404 can constitute the receiving section according to the present disclosure.

The received signal processing section 404 outputs the decoded information that is acquired through the receiving processes to the control section 401. The received signal processing section 404 outputs, for example, broadcast information, system information, RRC signaling, DCI, and so on, to the control section 401. Also, the received signal processing section 404 outputs the received signals and/or the signals after the receiving processes to the measurement section 405.

The measurement section 405 conducts measurements with respect to the received signals. For example, the measurement section 405 may perform same frequency measurement and/or different frequency measurement for one or both of the first carrier and the second carrier. When the serving cell is included in the first carrier, the measurement section 405 may perform the different frequency measurement in the second carrier based on a measurement instruction acquired from the received signal processing section 404. The measurement section 405 can be constituted by a measurer, a measurement circuit, or a measurement apparatus that can be described based on general understanding of the technical field to which the present disclosure pertains.

For example, the measurement section 405 may perform RRM measurements, CSI measurements, and so on based on the received signals. The measurement section 405 may measure the received power (for example, RSRP), the received quality (for example, RSRQ, SINR, SNR), the signal strength (for example, RSSI), propagation path information (for example, CSI), and so on. The measurement results may be output to the control section 401.

Note that the transmitting/receiving sections 203 may also receive downlink control information (DCI) (such as a DL assignment or an UL grant).

Also, the transmitting/receiving sections 203 may receive a downlink shared channel that is repeatedly transmitted. Also, the transmitting/receiving sections 203 may receive DCI used to schedule all repetitions of the downlink shared channel. Also, the transmitting/receiving sections 203 may receive DCI used to schedule a given number of repetitions of the downlink shared channel.

Also, the transmitting/receiving sections 203 may receive information related to at least one of one or more frequency bands (for example, CCs/BWPs) and one or more durations used to transmit a repetition (first aspect). The frequency band(s) may be one or more CCs or one or more BWPs in the same cell group or the same uplink control channel group.

Also, the control section 401 may control a process of receiving the downlink shared channel that is repeatedly transmitted. Specifically, the control section 401 may configure at least one of a frequency band and a duration for transmitting a repetition on the basis of the information related to at least one of a frequency band and a duration, and control the receiving of the downlink shared channel scheduled in at least a part of the configured frequency band and duration.

In addition, the control section 401 may also control the soft combining of data transmitted by the downlink shared channel on the basis of downlink control information (DCI) for each repetition (second aspect).

Specifically, the control section 401 may control the soft combining of data on the basis of a HARQ process number indicated by the DCI. Also, the control section 401 may control the soft combining of data on the basis of a counter DAI indicated by the DCI.

Also, the control section 401 may control the receiving of the downlink shared channel on the basis of a state of a transmission configuration indication (TCI) indicated by the DCI.

### <Hardware Configuration>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be achieved by a single apparatus physically or logically aggregated, or may be achieved by directly or indirectly connecting two or more physically or logically separate apparatuses (using wires, radio, or the like, for example) and using these plural apparatuses.

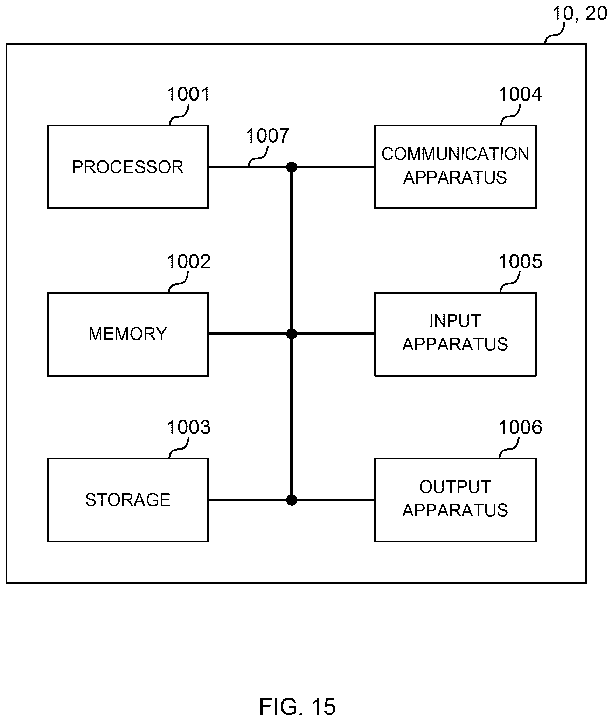

For example, the radio base station, user terminal, and so on according to embodiments of the present disclosure may function as a computer that executes the processes of the radio communication method of the present disclosure. Fig. 15 is a diagram illustrating an example of a hardware configuration of the radio base station and the user terminal according to one embodiment. Physically, the above-described radio base stations 10 and user terminal 20 may be formed as a computer apparatus that includes a processor 1001, a memory 1002, a storage 1003, a communication apparatus 1004, an input apparatus 1005, an output apparatus 1006, and a bus 1007.

Note that, in the following description, the word "apparatus" may be replaced by "circuit", "device", "unit", and so on. Note that the hardware configuration of a radio base station 10 and user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented simultaneously, sequentially, or in different manners, on two or more processors. Note that the processor 1001 may be implemented with one or more chips.

Each function of the radio base station 10 and the user terminal 20 is implemented by reading given software (program) on hardware such as the processor 1001 and the memory 1002, and by performing the calculations in the processor 1001, controlling the communication in the communication apparatus 1004, and controlling at least one of the reading and writing of data in the memory 1002 and the storage 1003.

The processor 1001 may control the whole computer by, for example, running an operating system. The processor 1001 may be configured with a central processing unit (CPU), which includes interfaces with peripheral terminal, control apparatus, computing apparatus, a register, and so on. For example, the above-described base band signal processing section 104 (204), call processing section 105, and so on may be implemented by the processor 1001.

Furthermore, the processor 1001 reads programs (program codes), software modules, or data, from at least one of the storage 1003 and the communication apparatus 1004, into the memory 1002, and executes various processes according to these. As for the programs, programs to allow computers to execute at least part of the operations described in the above-described embodiments may be used. For example, the control section 401 of the user terminal 20 may be implemented by control programs that are stored in the memory 1002 and that operate on the processor 1001, and other functional blocks may be implemented likewise.

The memory 1002 is a computer-readable recording medium, and may be constituted by, for example, at least one of a Read Only Memory (ROM), an Erasable Programmable ROM (EPROM), an Electrically EPROM (EEPROM), a Random Access Memory (RAM), and/or other appropriate storage media. The memory 1002 may be referred to as a "register", a "cache", a "main memory (main storage device)", and so on. The memory 1002 can store a program (program code), a software module, and the like, which are executable for implementing the radio communication method according to the embodiment of the present disclosure.

The storage 1003 is a computer-readable recording medium, and may be constituted by, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, a key drive), a magnetic stripe, a database, a server, and/or other appropriate storage media. The storage 1003 may be referred to as "secondary storage apparatus".

The communication apparatus 1004 is hardware (transmitting/receiving device) for performing intercomputer communication via at least one of a wired network and a wireless network, and for example, is referred to as "network device", "network controller", "network card", "communication module", and the like. The communication apparatus 1004 may be configured to include a high frequency switch, a duplexer, a filter, a frequency synthesizer, and so on in order to implement, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device for receiving input from the outside (for example, a keyboard, a mouse, a microphone, a switch, a button, a sensor, and so on). The output apparatus 1006 is an output device for allowing output to the outside (for example, a display, a speaker, a Light Emitting Diode (LED) lamp, and so on). Note that the input apparatus 1005 and the output apparatus 1006 may be provided in an integrated configuration (for example, a touch panel).

Furthermore, these apparatuses including the processor 1001, the memory 1002, and so on are connected by the bus 1007 so as to communicate information. The bus 1007 may be formed with a single bus, or may be formed with buses that vary between apparatuses.

Also, the radio base station 10 and the user terminal 20 may be configured to include hardware such as a microprocessor, a digital signal processor (DSP), an Application-Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced with other terms that convey the same or similar meanings. For example, at least one of "channels" and "symbols" may be replaced by "signals" (or "signaling"). The signal may also be a message. A reference signal may be abbreviated as an RS, and may be referred to as a pilot, a pilot signal, and so on, depending on which standard applies. Furthermore, a "component carrier (CC)" may be referred to as a "cell", a "frequency carrier", a "carrier frequency", and so on.

A radio frame may be comprised of one or more periods (frames) in the time domain. Each of one or a plurality of periods (frames) constituting a radio frame may be referred to as a subframe. Furthermore, a subframe may be comprised of one or a plurality of slots in the time domain. A subframe may be a fixed time duration (for example, 1 ms) that is not dependent on numerology.

Here, the numerology can be a communication parameter applied to at least one of transmission and reception of a certain signal or channel. The numerology can indicate, in one example, at least one of subcarrier spacing (SCS), bandwidth, symbol length, cyclic prefix length, subframe length, transmission time interval (TTI), the number of symbols per TTI, the radio frame configuration, particular filtering processing performed by the transceiver in frequency domains, particular windowing processing performed by a transceiver in time domains, and so on.

A slot may be comprised of one or more symbols in the time domain (Orthogonal Frequency Division Multiplexing (OFDM) symbols, Single Carrier Frequency Division Multiple Access (SC-FDMA) symbols, and so on). Also, a slot may be a time unit based on numerology.

A slot may include a plurality of mini slots. Each mini slot may be comprised of one or more symbols in the time domain. Also, a mini slot may be referred to as a "subslot". Each mini slot may be comprised of fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as "PDSCH (PUSCH) mapping type B".

A radio frame, a subframe, a slot, a mini slot, and a symbol all represent the time unit in signal communication. A radio frame, a subframe, a slot, a mini slot, and a symbol may be each called by other applicable names. Moreover, the time units such as frames, subframes, slots, mini slots, and symbols herein are used interchangeably.

For example, one subframe may be referred to as a "transmission time interval (TTI)", or a plurality of consecutive subframes may be referred to as a "TTI", or one slot or one mini slot may be referred to as a "TTI". That is, at least one of a subframe and a TTI may be a subframe (1 ms) in the existing LTE, may be a shorter period than 1 ms (for example, one to thirteen symbols), or may be a longer period of time than 1 ms. Note that the unit to represent the TTI may be referred to as a "slot", a "mini slot", and so on, instead of a "subframe".

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords, and so on, or may be the unit of processing in scheduling, link adaptation, and so on. When TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or multiple slots or one or more mini slots) may be the minimum time unit of scheduling. Also, the number of slots (the number of mini slots) to constitute this minimum time unit of scheduling may be controlled.

TTI having a time length of 1 ms may be called usual TTI (TTI in LTE Rel. 8 to 12), normal TTI, long TTI, a usual subframe, a normal subframe, a long subframe, a slot, or the like. A TTI that is shorter than a usual TTI may be referred to as "shortened TTI", "short TTI", "partial TTI" (or "fractional TTI"), "shortened subframe", "short subframe", "mini slot", "sub-slot", "slot", or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB can be the same regardless of the numerology, and in one example, it can be 12. The number of subcarriers included in the RB can be determined on the basis of numerology.

Also, an RB may include one or more symbols in the time domain, and may be one slot, one mini slot, one subframe, or one TTI in length. One TTI, one subframe, or the like can be constituted as one or a plurality of resource blocks.

Note that one or more RBs may be referred to as a "physical resource block (Physical RB (PRB))", a "subcarrier group (SCG), a "resource element group (REG)", a "PRB pair", an "RB pair", and so on.

Furthermore, a resource block may be comprised of one or more resource elements (REs). For example, one RE may be a radio resource field of one subcarrier and one symbol.

A bandwidth part (BWP) (also be referred to as a partial bandwidth) can represent a subset of consecutive common resource blocks (RBs) for a certain numerology in a certain carrier. Here, the common RB can be specified by the index of the RB using the common reference point of the carrier as a reference. The PRB can be defined in a certain BWP and be numbered within the BWP.

The BWP can include a BWP for UL (UL BWP) and a BWP for DL (DL BWP). For the UE, one or a plurality of BWPs can be configured in one carrier.

At least one of the configured BWPs can be active, and the UE may not necessarily assume that it will transmit and receive given signals/channels outside the active BWP. Moreover, terms "cell", "carrier", and the like are herein used interchangeably with "BWP".

Note that the structures of radio frames, subframes, slots, mini slots, symbols, and so on described above are merely examples. For example, configurations pertaining to the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefixes (CPs), and so on can be variously changed.

Also, the information and parameters described in the present disclosure may be represented in absolute values or in relative values with respect to given values, or may be represented using other applicable information. For example, a radio resource may be specified by a given index.

The names used for parameters and so on in the present disclosure are in no respect limiting. In addition, an equation and so on using these parameters may differ from those explicitly disclosed in the present disclosure. Since various channels (Physical Uplink Control CHannel (PUCCH), Physical Downlink Control CHannel (PDCCH), and so on) and information elements can be identified by any suitable names, the various names assigned to these individual channels and information elements are in no respect limiting.

The information, signals, and/or others described in the present disclosure may be represented by using a variety of different technologies. For example, data, instructions, commands, information, signals, bits, symbols, and chips, all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals, and so on may be input and output via a plurality of network nodes.

The information, signals, and so on that are input and/or output may be stored in a specific location (for example, in a memory), or may be managed in a control table. The information, signals, and so on that are input and/or output can be overwritten, updated, or appended. The information, signals, and so on that are output may be deleted. The information, signals, and so on that are input may be transmitted to other apparatuses.

The reporting of information is by no means limited to the aspects/embodiments described in the present disclosure, and may be performed using other methods. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs), and so on), Medium Access Control (MAC) signaling), and other signals and/or combinations of these.

Note that physical layer signaling may be referred to as "L1/L2 (Layer 1/Layer 2) control information (L1/L2 control signals)", "L1 control information (L1 control signal)", and so on. Also, RRC signaling may be referred to as RRC messages, and can be, for example, an RRC connection setup message, RRC connection reconfiguration message, and so on. Also, MAC signaling may be reported using, for example, MAC control elements (MAC CEs (Control Elements)).

Also, reporting of given information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a given value).

Software, whether referred to as "software", "firmware", "middleware", "microcode", or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSLs), and the like) and wireless technologies (infrared radiation, microwaves, and the like), at least one of these wired technologies and wireless technologies are also included in the definition of communication media.

The terms "system" and "network" as used in the present disclosure are used interchangeably.

The terms such as "precoding", "precoder", "weight (precoding weight)", "transmission power", "phase rotation", "antenna port", "layer", "number of layers", "rank", "beam", "beam width", "beam angle", "antenna", "antenna element", and "panel" can be herein used interchangeably.

The terms such as "base station (BS)", "radio base station", "stationary station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" can be herein used interchangeably. The base station may be called a term such as a macro cell, a small cell, a femto cell, a pico cell, and the like.

The base station is capable of covering one or a plurality of (e.g., three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to all or part of the coverage area of at least one of a base station and a base station subsystem that provides communication services within this coverage.

In the present disclosure, the terms "mobile station (MS)", "user terminal", "user equipment (UE)", "terminal", etc. may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station and a mobile station may be referred to as a transmitting apparatus, a receiving apparatus, and so on. Note that at least one of the base station and the mobile station may be a device mounted on a mobile unit, a mobile unit itself, or the like. The mobile unit may be a vehicle (such as a car, an airplane, for example), an unmanned mobile unit (such as a drone, an autonomous vehicle, for example), or a robot (manned or unmanned). Note that at least one of the base station and the mobile station also includes a device that does not necessarily move during a communication operation.

Furthermore, the radio base stations in the present disclosure may be interpreted as user terminal. For example, each aspect/embodiment of the present disclosure may be applied to a configuration in which communication between a radio base station and user terminal is replaced by communication among a plurality of user terminal (which may be referred to as, for example, D2D (Device-to-Device), V2X (Vehicle-to-Everything), and so on). In this case, the user terminal 20 may have the functions of the radio base stations 10 described above. In addition, the wording such as "up" and "down" may be replaced with the wording corresponding to the terminal-to-terminal communication (for example, "side"). For example, an uplink channel and a downlink channel may be interpreted as a side channel.

Likewise, the user terminal in the present disclosure may be interpreted as radio base stations. In this case, the radio base stations 10 may have the functions of the user terminal 20 described above.

Certain actions that have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps using exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-RAT (Radio Access Technology), New Radio (NR), New radio access (NX), Future generation radio access (FX), GSM (registered trademark) (Global System for Mobile communications), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and/or next generation systems that are enhanced based on these. Further, a plurality of systems may be combined and applied (for example, a combination of LTE or LTE-A and 5G).

The phrase "based on" as used in the present disclosure does not mean "based only on", unless otherwise specified. In other words, the phrase "based on" means both "based only on" and "based at least on".

Reference to elements with designations such as "first", "second", and so on as used in the present disclosure does not generally limit the number/quantity or order of these elements. These designations are used in the present disclosure only for convenience, as a method for distinguishing between two or more elements. In this way, reference to the first and second elements does not imply that only two elements may be employed, or that the first element must precede the second element in some way.

The terms "judge" and "determine" as used in the present disclosure may encompass a wide variety of actions. For example, "determining" may be regarded as "determining" judging, calculating, computing, processing, deriving, investigating, looking up (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory), and so on.

In addition, to "judge" and "determine" as used herein may be interpreted to mean making judgements and determinations related to resolving, selecting, choosing, establishing, comparing, and so on. In other words, to "judge" and "determine" as used herein may be interpreted to mean making judgements and determinations related to some action.

In addition, to "judge" and "determine" as used herein may be interpreted to mean "assuming", "expecting", "considering", and so on.

The term "maximum transmission power" described in the present disclosure may mean the maximum value of transmission power, the nominal UE maximum transmit power, or the rated UE maximum transmit power.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced by "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other". Moreover, this term can mean that "A and B are different from C". The terms such as "separate" or "coupled" can be construed similarly as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of the claims. Consequently, the description in the present disclosure is provided only for the purpose of explaining examples, and should by no means be construed to limit the invention according to the present disclosure in any way.

## Claims

1. User terminal comprising:
a receiving section that receives a downlink shared channel scheduled by downlink control information (DCI) for each repetition; and
a control section that controls a soft combining of data transmitted by the downlink shared channel based on the DCI.

2. The user terminal according to claim 1, wherein the control section controls the soft combining of data based on a Hybrid Automatic Repeat reQuest (HARQ) process number indicated by the DCI.

3. The user terminal according to claim 1, wherein the control section controls the soft combining of data based on a counter downlink assignment index (DAI) indicated by the DCI.

4. The user terminal according to any one of claims 1 to 3, wherein the receiving section receives information indicating at least one of one or more frequency bands and one or more durations, and
the control section controls a receiving of the downlink shared channel in at least a part of the frequency band and the duration configured based on the information.

5. The user terminal according to claim 4, wherein the frequency band is one or more carriers or one or more bandwidth parts in a same cell group or a same uplink control channel group.

6. The user terminal according to any one of claims 1 to 4, wherein the control section controls the receiving of the downlink shared channel based on a state of a transmission configuration indication (TCI) indicated by the DCI.
